# FASCICULE DE BREVET EUROPEEN

(11) **EP 0 844 040 B1**
(45) Date de publication et mention de la délivrance du brevet: **25.10.2000**
(21) Numéro de dépôt: 97402710.4
(22) Date de dépôt: 13.11.1997
(51) Int. Cl.: B23K 11/30

(54) **Tête de rodage à extraction automatique des copeaux**
Punktschweisselektroden-Fräswerkzeug mit automatischer Späneableitung
Spot welding tip dresser with automatic chip removal

(30) Priorité: 22.11.1996 FR 9614505
(43) Date de publication de la demande: 27.05.1998
(73) Titulaire: A.M.D.P., 78870 Bailly (FR); Service de Machines et Outillage Technique - SMOT, 94230 Cachan (FR)
(72) Inventeur: Auchecorne, Daniel, 92420 Vaucresson (FR); Boudard, Guy, 94800 Villejuif (FR)
(74) Mandataire: de Saint-Palais, Arnaud Marie

(56) Documents cités:
- DE-A- 3 700 223
- DE-A- 3 740 230
- DE-U- 8 816 328
- DE-U- 29 607 927
- FR-A- 2 738 518
- PATENT ABSTRACTS OF JAPAN vol. 11, no. 372 (M-648), 4 décembre 1987 & JP 62 144885 A (YOKOTA KOGYO KK ET AL.), 29 juin 1987,

## Description

La présente invention concerne une tête de rodage amovible pour le rodage d'électrodes d'appareils de soudage par points par résistance, à poste fixe ou portés par des robots.

Elle a plus particulièrement pour objet une tête de rodage à vitesse de coupe contrôlable et à haut pouvoir d'éjection des copeaux.

D'une façon générale, on sait qu'il a déjà été proposé, notamment par la demande de brevet No 95 10645 déposée le 8 septembre 1995 aux noms des Demanderesses ou dans le brevet DE 88 16 328 U, une tête de rodage présentant un corps sensiblement cylindrique venant se monter, de façon amovible, dans une couronne porte-outils couplée à un motoréducteur ou à un dispositif de roue libre associé à un levier d'actionnement.

Ce corps cylindrique comprend une face radiale concave en forme de cuvette dans laquelle débouche au moins une cavité prismatique axialement traversante, en forme de secteur circulaire.

La tête de rodage comprend en outre au moins une lame tranchante amovible réalisée en une matière plus dure que le corps, conformée de manière à s'appliquer et se fixer, de façon démontable, contre une face radiale de la cavité prismatique.

Cette lame présente une arête coupante, en saillie par rapport à la concavité et dont la forme correspond au profil de l'embout que l'on désire roder.

Bien entendu, dans le cas où la tête de rodage est destinée à effectuer un rodage in situ des électrodes (sans démontage de celles-ci), la tête de rodage peut être double de manière à pouvoir traiter à la fois les deux électrodes coaxiales d'une même pince. Dans ce cas, les deux faces radiales du corps présentent deux concavités coaxiales symétriques par rapport à un plan médian de symétrie. La lame comprend, quant à elle, deux arêtes tranchantes sensiblement symétriques par rapport audit plan.

Il s'avère que cette solution qui permet un contrôle précis de la profondeur de coupe et de la quantité de matière enlevée par tour, présente cependant l'inconvénient d'être sujette à des bourrages.

En effet, les copeaux produits par les arêtes tranchantes au cours d'une opération de rodage s'accumulent dans le volume de la cavité prismatique qui se trouve fermé par les électrodes, lors du rodage. Ces copeaux finissent par combler la cavité prismatique et s'y trouvent coincés de sorte qu'une intervention manuelle d'extraction des copeaux devient fréquemment nécessaire à la fin du rodage.

Par ailleurs, un autre inconvénient de cette solution consiste en ce que la lame tranchante n'est maintenue en appui qu'au niveau de l'une de ses faces principales et est donc sujette à des phénomènes vibratoires engendrant des imprécisions et même une usure prématurée de la tête.

L'invention a donc plus particulièrement pour but de supprimer ces inconvénients.

A cet effet, elle propose une tête de rodage dont le corps comprend :
- au moins une face radiale principale présentant une concavité en forme de cuvette sensiblement complémentaire de celle de l'embout que l'on désire roder ;
- une fente radiale débouchant dans ladite concavité et destinée à recevoir une lame tranchante de forme sensiblement complémentaire dont l'arête s'étend à une distance prédéterminée de la paroi de la concavité ;
- des moyens de blocage déconnectables de la lame dans ladite fente comme décrit dans le brevet DE 88 16 328 U ; caractérisée en ce que :
- au niveau d'un secteur circulaire adjacent à la fente, la susdite face radiale comprend une empreinte concave présentant, dans un plan axial, un profil incurvé dont la profondeur s'accroît en partant du centre du corps, puis décroît pour atteindre une valeur minimale au niveau de la paroi cylindrique du corps, cette empreinte servant à recevoir et à canaliser les copeaux engendrés par la lame de manière à les évacuer radialement vers l'extérieur, sensiblement au niveau de la face radiale du corps:

Avantageusement, le corps pourra comprendre deux fentes radiales axialement opposées. Dans ce cas, les bords axiaux adjacents des deux lames qui s'engagent respectivement dans les deux fentes, pourront comprendre dans leurs parties centrales deux encoches hémicylindriques respectives en regard l'une de l'autre de manière à délimiter un passage cylindrique dans laquelle peut s'engager une clavette de fixation passant par un perçage radial traversant réalisé dans le corps.

On obtient ainsi une fixation déconnectable des lames d'une extrême simplicité et néanmoins d'une très bonne efficacité.

Un mode d'exécution de l'invention sera décrit ci-après, à titre d'exemple non limitatif, avec référence aux dessins annexés dans lesquels :
La figure 1 est une vue en perspective schématique d'un appareil de rodage d'électrodes de soudage par points ;
La figure 2 est une vue en perspective schématique d'une tête de rodage double utilisable dans l'appareil représenté figure 1 ;
La figure 3 est une vue de la face supérieure de la tête de rodage représentée figure 2 ;
La figure 4 est une coupe axiale partielle montrant à plus grande échelle le profil de l'empreinte concave servant à l'éjection des copeaux et celui de l'arête tranchante des deux lames ;
La figure 5 est une vue en coupe de la tête de rodage illustrant le principe de la fixation des lames.

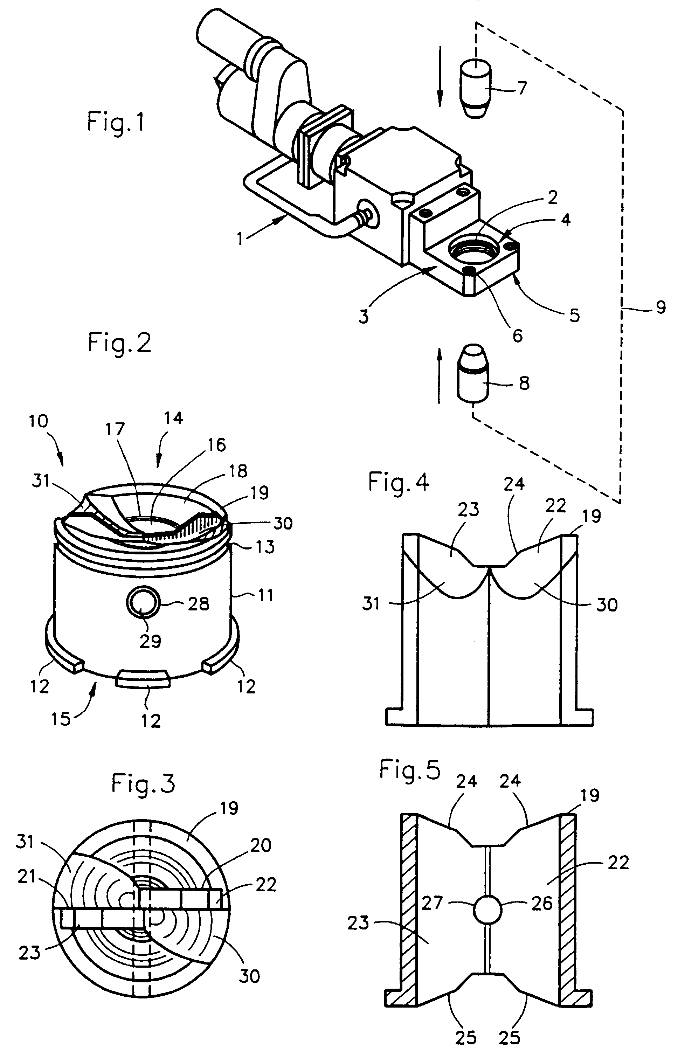

Dans l'exemple représenté sur la figure 1, l'appareil de rodage se compose d'un motoréducteur pneumatique 1 dont un pignon de sortie (non visible) engrène avec une couronne dentée porte-outils 2 montée rotative dans un boîtier parallélépipédique 3 qui prolonge axialement le corps du motoréducteur 1.

Les deux faces principales, opposées 4, 5 du boîtier 3, sont munies de deux ouvertures circulaires coaxiales à la couronne dentée 2 et de diamètre sensiblement égal au diamètre moyen de cette dernière.

Le boîtier 3 se trouve donc traversé de part en part par un passage cylindrique 6, délimité essentiellement par la surface intérieure de la couronne 2, dans lequel peut venir s'engager et se fixer une tête de rodage double, par exemple du type de celle représentée sur les figures 2 à 5.

Cet appareil de rodage peut être monté sur un support fixe ou mobile.

Il est destiné à roder simultanément les deux électrodes 7, 8 d'une pince à souder (indiquée schématiquement par les traits interrompus 9). A cet effet, les électrodes 7, 8 de la pince (ouverte) sont amenées coaxialement, de part et d'autre de la couronne porte-outils 2. Le serrage effectué par la pince provoque ensuite l'engagement des électrodes 7, 8 au contact des deux profils tranchants de la tête de rodage (qui se trouve, en quelque sorte, pincée par les deux électrodes).

L'entraînement en rotation de la couronne porte-outils 2 et donc de la tête de rodage par le motoréducteur 1 provoque ensuite le rodage simultané des deux électrodes 7, 8. L'épaisseur de métal enlevée peut être déterminée à l'avance grâce à un dispositif prenant en compte le nombre de tours, l'effort de serrage de la pince à souder et/ou la vitesse de rotation de la tête de rodage.

La tête de rodage 10 représentée sur la figure 2, comprend un corps cylindrique 11, par exemple en acier, dont le diamètre extérieur est sensiblement égal au diamètre intérieur de la couronne 2 dans laquelle il vient s'engager.

La fixation amovible de la tête 10 dans la couronne est ici obtenue, d'une part, au moyen de crabots 12 prévus sur l'une des bordures circulaires du corps 11 et qui viennent s'engager dans des conformations sensiblement complémentaires de la couronne 2 et, d'autre part, au moyen d'un circlip qui s'engage dans une gorge circulaire 13 prévue au voisinage de l'autre bordure circulaire du corps 11.

Les faces supérieure 14 et inférieure 15 de la tête 10 présentent chacune une concavité en forme de cuvette dont le profil correspond à celui d'un embout d'une électrode de soudage 7 ou 8, Fig 1.

Cette concavité comprend un fond plat circulaire 16 prolongé par un congé 17 de profil incurvé puis par une portion tronconique 18 qui s'étend jusqu'à atteindre le niveau de la face 14, 15 qui se présente alors sous la forme d'une couronne 19.

La tête de rodage 10 comprend en outre deux fentes axialement traversantes 20, 21, de section rectangulaire, diamétralement opposées par rapport à l'axe de la tête. Ces deux fentes 20, 21 qui débouchent au niveau des deux concavités s'étendent radialement à partir de l'axe central de la tête sur une distance inférieure au rayon de la tête (jusqu'au niveau de la couronne 19).

Dans chacune de ces fentes 20, 21 s'engage une lame 22, 23 de section complémentaire, comprenant deux arêtes coupantes 24, 25 dont la forme correspond à un demi-profil de l'embout de l'électrode que l'on veut roder, ces deux arêtes 24, 25 s'étendant respectivement en saillie par rapport à la paroi des concavités, à une distance prédéterminée de celle-ci.

En vue de leur blocage, les bords axiaux des deux lames comprennent, dans leurs parties centrales, deux encoches hémicylindriques 26, 27 en regard l'une de l'autre, qui délimitent un passage cylindrique situé au droit d'un perçage radial traversant coaxial 28 réalisé dans le corps 11. Le blocage est alors assuré grâce à une goupille 29 passant par ledit perçage et traversant ledit passage. Il s'agit là d'un mode de blocage particulièrement simple, peu coûteux et facilement déconnectable.

Grâce à ces dispositions, les lames 22, 23 se trouvent maintenues avec précision (sur quatre côtés) dans les fentes rectangulaires 20, 21 et bloquées axialement par la goupille 29.

Elles ne sont donc pas sujettes à des vibrations et la précision obtenue est accrue.

Conformément à l'invention, chacune des faces principales concaves de la tête de rodage comprend dans une région adjacente aux deux lames, deux empreintes concaves respectives 30, 31 présentant, dans un plan radial, une section en forme de secteur circulaire partant depuis l'axe central de la tête pour venir se terminer dans sa paroi cylindrique. Ces deux empreintes réalisent une encoche dans les couronnes 19 qui leurs sont respectivement adjacentes.

Comme on peut le voir sur la figure 4, chacune des empreintes est borgne (non traversante), et présente dans le plan axial un profil incurvé dont la profondeur, relativement à la face principale, s'accroît en partant du centre du corps (où elle se trouve au niveau du fond de la concavité) puis, après passage par un maximum, décroît ensuite jusqu'au niveau de la paroi cylindrique du corps. Dans cet exemple, elle débouche sur la paroi cylindrique du corps légèrement en dessous du niveau de la couronne.

Avantageusement, le bord radial de l'empreinte situé à l'opposé de la lame coupante pourra présenter une forme incurvée.

Grâce à ces dispositions, les copeaux formés par les arêtes tranchantes 24, 25 des lames 22, 23 s'engagent dans les empreintes concaves 30, 31 et sous l'effet conjugué de la force centrifuge et des parois de l'empreinte 30, 31, s'extraient radialement par un orifice demeuré libre entre l'électrode en cours de rodage et la couronne porte-outils de l'appareil de rodage. Cette solution permet d'éviter tout phénomène de bourrage et donc toute imprécision du rodage due à un tel bourrage.

## Revendications

1. Tête de rodage (10) amovible pour appareil servant à roder, en vue de leur réutilisation, des électrodes (7, 8) d'appareils de soudage par points (9) comprenant chacune un embout présentant une forme de révolution, cet appareil faisant intervenir une couronne porte-outils (2) couplée à des moyens d'entraînement en rotation (1) et dans laquelle vient se monter, de façon amovible, ladite tête (10) comprenant :
- un corps cylindrique (11) comportant au moins une face radiale (14, 15) présentant une concavité en forme de cuvette, sensiblement complémentaire de celle de l'embout que l'on désire roder ;
- au moins une fente radiale (20, 21) débouchant dans ladite concavité et destinée à recevoir une lame tranchante (22, 23), de forme sensiblement complémentaire, dont l'arête (24, 25) s'étend à une distance prédéterminée de la paroi de la concavité ;
- des moyens de blocage (29) déconnectables de la lame (22, 23) dans ladite fente (20, 21);
caractérisée en ce qu'au niveau d'un secteur circulaire adjacent à la fente (20, 21), la susdite face radiale (14, 15) comprend une empreinte concave (30, 31) présentant, dans un plan axial, un profil incurvé dont la profondeur s'accroît en partant du centre de la tête (10) puis décroît pour atteindre une valeur minimale au niveau de la paroi cylindrique du corps (11), cette empreinte (30, 31) servant à recevoir et à canaliser les copeaux engendrés par la lame (22, 23) de manière à les évacuer radialement vers l'extérieur.

2. Tête de rodage selon la revendication 1,
caractérisée en ce que le corps (11) comprend deux fentes radiales (20, 21) axialement opposées qui s'étendent chacune depuis le centre, sur une fraction de son rayon, et qui débouchent au niveau de la susdite concavité, ainsi que deux empreintes concaves (30, 31) respectivement adjacentes auxdites fentes (20, 21).

3. Tête de rodage selon l'une des revendications 1 et 2,
caractérisée en ce que le corps (11) comprend deux faces radiales parallèles (14, 15), sensiblement symétriques par rapport à un plan médian de symétrie, ces deux faces radiales comprenant deux concavités opposées dans lesquelles débouchent chacune desdites fentes (20, 21), et en ce que les susdites lames (22, 23) comprennent chacune deux arêtes tranchantes opposées (24, 25) qui s'étendent respectivement en saillie à une distance prédéterminée des parois des deux concavités.

4. Tête de rodage selon la revendication 3,
caractérisée en ce que les bords axiaux adjacents des deux lames (22, 23) qui s'engagent dans les susdites fentes (20, 21) comprennent dans leurs parties centrales deux encoches hémicylindriques respectives (26, 27), en regard l'une de l'autre, qui délimitent un passage cylindrique dans lequel s'engage une clavette (29) passant par un perçage radial traversant (28) réalisé dans le corps (11).

## Patentansprüche

1. Abnehmbarer Schleifkopf (10) für ein Gerät, das zum Abschleifen der Elektroden (7, 8) von Punktschweißgeräten (9) im Hinblick auf deren Wiederverwendung dient, wobei jede derselben ein drehbares Ansatzstück aufweist und dieses Gerät mit einem Werkzeughaltekranz (2) arbeitet, der mit Mitteln (1) zum Erzeugen einer Drehbewegung versehen ist und in dem der Kopf (10) abnehmbar montiert ist, der folgendes aufweist:
- einen zylindrischen Kopf (11) mit mindestens einer radialen Fläche (14, 15), die eine Wölbung in Form einer Mulde aufweist, die im wesentlichen komplementär zu der des Ansatzstückes ist, das man abschleifen möchte;
- mindestens einen radialen Schlitz (20, 21), der in die Wölbung einmündet und dazu dient, eine Schneidklinge (22, 23) mit im wesentlichen komplementärer Form aufzunehmen, deren Kante (24, 25) in einem vorbestimmten Abstand von der Wand der Wölbung verläuft;
- von der Klinge (22, 23) im Schlitz (20, 21) lösbare Blockiermittel (29);
dadurch gekennzeichnet, daß die radiale Fläche (14, 15) an einem benachbart dem Schlitz (20, 21) gelegenen Kreissektor eine konkave Vertiefung (30, 31) aufweist, die in einer Axialebene mit einem gekrümmten Profil versehen ist, dessen Tiefe von der Mitte des Kopfes (10) aus zunimmt und dann abnimmt, um an der zylindrischen Wand des Körpers (11) einen minimalen Wert zu erreichen, wobei diese Vertiefung (30, 31) dazu dient, die von der Klinge (22, 23) erzeugten Späne aufzunehmen und zu kanalisieren, um sie radial nach außen abzuziehen.

2. Schleifkopf nach Anspruch 1, dadurch gekennzeichnet, daß der Körper (11) zwei einander axial gegenüberliegende radiale Schlitze (20, 21), die sich jeweils von seiner Mitte aus auf einem Teil seines Radius erstrecken und in die Wölbung einmünden, sowie zwei konkave Vertiefungen (30, 31) aufweist, die jeweils benachbart den Schlitzen (20, 21) liegen.

3. Schleifkopf nach einem der Ansprüche 1 und 2, dadurch gekennzeichnet, daß der Körper (11) zwei parallele, radiale Flächen (14, 15) aufweist, die im wesentlichen symmetrisch zu einer Symmetriemittelebene verlaufen, wobei diese beiden radialen Flächen zwei einander gegenüberliegende Wölbungen aufweisen, in die jeder der Schlitze (20, 21) einmündet, und daß die Klingen (22, 23) jeweils zwei einander gegenüberliegende Schneidklingen (24, 25) aufweisen, die jeweils in einem vorbestimmten Abstand von den Wänden der beiden Wölbungen vorstehen.

4. Schleifkopf nach Anspruch 3, dadurch gekennzeichnet, daß die axialen Ränder der beiden Klingen (22, 23), die in die Schlitze (20, 21) eingreifen, in ihren Mittelteilen zwei entsprechende halbzylindrische Kerben (26, 27) aufweisen, welche einander zugewandt sind und einen zylindrischen Durchgang festlegen, in den ein Keil (29) eingreift, der durch eine im Körper (11) ausgebildete Radialdurchgangsbohrung (28) läuft.

## Claims

1. Movable honing head (10) for a honing device for the re-use of electrodes (7, 8) of resistance spot welding devices (9) each including an end piece having a form of revolution, this device introducing a tool holder ring (2) coupled to rotary-drive means (1) in which a head (10) can be movably mounted, said head including :
- a cylindrical body (11) comprising at least one radial face (14, 15) having a basin-shaped concavity approximately complementary to that of the end piece it is desired to hone ;
- at least one radial slit (20, 21) opening into said concavity and intended to receive a sharp blade (22, 23) having an approximately complementary shape whose edge (24, 25) extends to a predetermined distance from the wall of the concavity ;
- locking means (29) able to be disconnected from the blade (22, 23) in said slit (20, 21);
characterised in that at the level of a circular sector adjacent to the slit (20, 21) said radial face (14, 15) includes a concave indentation (30, 31) having inside an axial plane a curved inward profile whose depth increases starting from the centre of the head (10) and then decreases so as to reach a minimum value at the level of the cylindrical wall of the body (11), this indentation (30, 31) being used to receive and channel the chips generated by the blade (22, 23) so as to remove them outside radially.

2. Honing head according to claim 1, characterised in that the body (11) includes two radial slits (20, 21) axially opposite each other and each extending from the centre over a fraction of its radius and projecting to the level of said concavity, as well as two concave indentations (30, 31) respectively adjacent to said slits (20, 21).

3. Honing head according to claim 1 or 2, characterised in that the body (11) includes two parallel radial faces (14, 15) approximately symmetrical with respect to a median plane of symmetry, these two radial faces including opposing concavities into which each of said slits (20, 21) opens, and in that said blades (22, 23) each include two opposing sharp edges (24, 25) extending respectively projecting to a predetermined distance from the walls of the two concavities.

4. Honing head according to claim 3, characterised in that the axial adjacent edges of the two blades (22, 23) which are engaged in said slits (20, 21) include in their central portions two respective semi-cylindrical notches (26, 27) opposite each other which delimit a cylindrical passage in which a key (29) is engaged passing through a traversing radial bore (28) embodied in the body (11).
